Europäisches Patentamt

European Patent Office

Office européen des brevets

(11) Publication number: **0 260 898 B1**

## EUROPEAN PATENT SPECIFICATION

(45) Date of publication of patent specification: **29.04.92** (51) Int. Cl.5: **G11B 23/03**

(21) Application number: **87308071.7**

(22) Date of filing: **11.09.87**

(54) Disc cartridge.

(30) Priority: **16.09.86 JP 141956/86**
**16.09.86 JP 141957/86**
**25.03.87 JP 43774/87**

(43) Date of publication of application:
**23.03.88 Bulletin 88/12**

(45) Publication of the grant of the patent:
**29.04.92 Bulletin 92/18**

(84) Designated Contracting States:
**AT DE FR GB NL**

(56) References cited:
**EP-A- 0 142 411**
**EP-A- 0 167 167**
**EP-A- 0 277 809**
**DE-A- 3 606 600**
**US-A- 3 854 784**

**JP-U-6152377**

**PATENT ABSTRACTS OF JAPAN vol. 7, no. 260 (P-237) 1405 18 November 1983, & JP-A-58 141473 (KIYANON DENSHI K.K.)**

**PATENT ABSTRACTS OF JAPAN vol. 9, no. 314 (P-412) 2037 10 December 1985, & JP-**

**A-60 143491 (FUJITSU K.K.)**

(73) Proprietor: **SONY CORPORATION**
**7-35 Kitashinagawa 6-Chome Shinagawa-ku Tokyo 141(JP)**

(72) Inventor: **Suzuki, Akira c/o Sony Corporation Patents Division 7-35 Kitashinagawa Shinagawa-ku Tokyo 141(JP)**
Inventor: **Ishimatsu, Yoshikazu c/o Sony Corporation Patents Division 7-35 Kitashinagawa Shinagawa-ku Tokyo 141(JP)**

(74) Representative: **Purvis, William Michael Cameron et al D. Young & Co. 10 Staple Inn London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(-/2.18/2.0)

## Description

The invention relates generally to disc cartridges and, more particularly, to a disc cartridge for keeping therein a disc-shaped recording medium in such a fashion that the disc-shaped recording medium can be recorded and/or reproduced in that state.

It has previously been proposed to provide a disc-shaped recording medium such as a so-called compact disc in a cartridge in such a fashion that reproduction from the disc-shaped recording medium is possible in that state. Conventionally, this type of a disc cartridge is provided with a lid hinged to a housing main body to be freely openable and closable to exchange a disc-shaped recording medium.

When the disc cartridge is arranged to be freely openable and closable as described above, the disc cartridge must be provided with a lock device to prevent the lid from being opened inadvertently under the condition that the disc-shaped recording medium is kept in the disc cartridge with its lid closed. In practice, it is desired that such lock device is easy to handle to release the lid from locking.

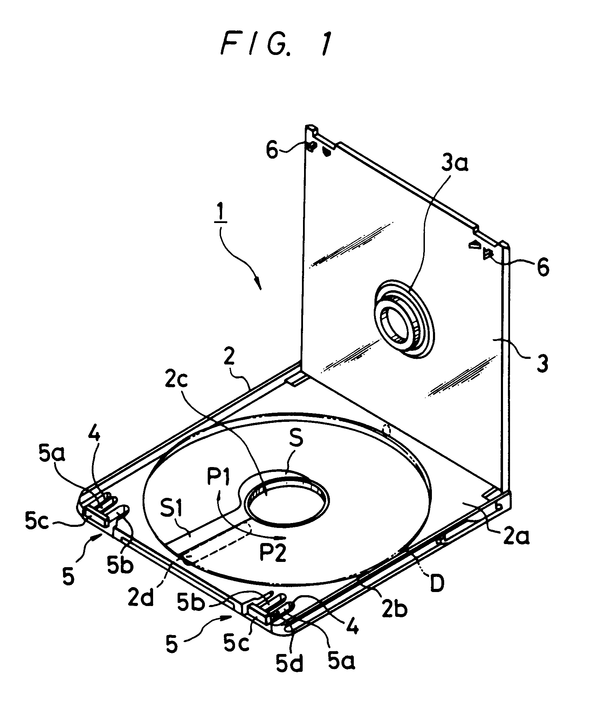

To this end, such a lock device is proposed and is disclosed in Japanese Utility Model Laid-Open Gazette No 61-52377. An example of such a conventional lock device will be described hereinafter with reference to Figures 1 to 3 of the accompanying drawings.

Referring to Figure 1, there is shown a disc cartridge 1 which generally comprises a housing main body 2 and a lid 3 formed of a transparent synthetic resin material and hinged to the housing main body 2 to be freely openable and closable. A cut-away concave portion 4 which takes the form of a concavity is formed near each of both sides of the front of a main wall portion 2a of the housing main body 2, and a lock release operation portion 5 is located within each of the cut-away concave portions 4.

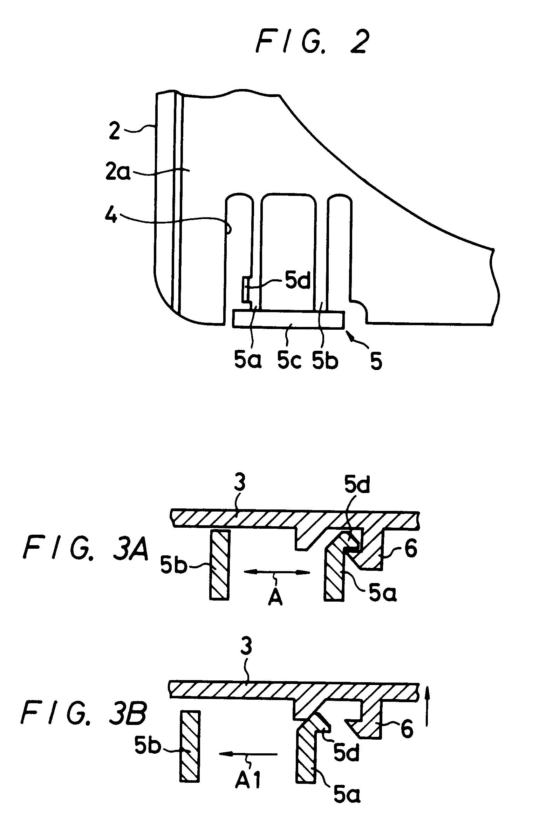

The lock release operation portion 5 will be described more fully. As shown in Figure 2, on the bottom surface of the cut-away concave portion 4, there are formed two arm members 5a and 5b side-by-side with a predetermined spacing in the left and right directions. The two arm members 5a and 5b can respectively be extended forward and elastically deformed. As illustrated in Figure 2, to the front end portions of the arm members 5a and 5b, there is fixed a release operation button 5c so as to extend across both the arm members 5a and 5b. On the upper portion of the front end of the arm member 5a, there is formed a lock member 5d which protrudes in the lateral direction. When the lid 3 is closed, as shown in Figure 3A, the lock member 5d is engaged with a hook portion 6 formed on the lower surface of the front end portion of the lid 3 whereby the lid 3 is locked.

In the thus constructed lock release operation portion 5, when the user touches the front surfaces of the lock release operation button 5c with his fingers and operates the same, both the arm members 5a and 5b are elastically deformed so that the release operation button 5c and the arm members 5a and 5b are displaced in the lateral direction that is, in the direction shown by arrow A in Figure 3A. Accordingly, when the release operation button 5c is moved in the direction shown by arrow A1 in Figure 3B, the lock member 5d formed on the arm member 5a is disengaged from the hook portion 6 of the lid 3 thereby to break the locking of the lid 3. Thus the lid 3 can thus be opened to, for example, exchange a disc-shaped recording medium D (hereinafter simply referred to as a disc D).

As described above, according to the lock device used in the conventional disc cartridge, the lid 3 is locked to and released from the housing main body 2 by elastically deforming the two arm members 5a and 5b.

Referring back to Figure 1, a concave portion 2b is formed on the main wall portion 2a of the housing main body 2, and the shape of the concave portion 2b is selected to be substantially the same as the outer peripheral shape of the disc D to keep the disc D in the concave portion 2b. When kept in the disc cartridge 1, the disc D is restricted from moving within the housing main body 2 by the concave portion 2b, and this concave portion 2b can protect the outer peripheral edge of the disc D and also the recording portion of the disc D.

Further, through the concave portion 2b of the housing main body 2, there is formed an insertion opening 2c into which a disc table of recording and/or reproducing apparatus (not shown) is inserted when the disc cartridge 1 is loaded into the recording and/or reproducing apparatus and an opening 2d through which the disc D is exposed in part to the outside to enable a pick-up device of the recording and/or reproducing apparatus to record information on and/or reproduce it from the disc D. The disc table (not shown) inserted through the insertion opening 2c holds the disc D with the aid of a support member 3a formed rotatably on the underside of the lid 3 and rotates the disc D in such a fashion that the disc D is suspended above the bottom surface of the concave portion 2b of the housing main body 2 by a predetermined amount.

In order to prevent dust, smudges and finger marks from adhering through the opening 2d of the housing main body 2 to the disc D kept in the disc cartridge 1 during non-use and also to protect the disc D from fingermarks when the disc cartridge 1 is loaded into or ejected from the recording and/or reproducing apparatus, a shutter S is mounted on the housing main body 2 to be freely rotatable in the directions shown by arrows P1 and P2 in Figure 1. The shutter S is provided with a slit S1 having a width equal to or wider than that of the opening 2d of the housing main body 2. When the shutter S is rotated in the direction shown by the arrow P2, the opening 2d is opened to enable the pick-up device to read and/or record the information from and/or on the disc D. When the shutter S is rotated in the direction shown by the arrow P1, the opening 2d is closed to protect the disc D from dust, smudges and fingermarks.

In this previously proposed example, the lock release operation portion 5 is formed as a quadrilateral by connecting the front ends of the two arm members 5a and 5b extended forward from the bottom surface of the cut-away concave portion 4 at a predetermined spacing by the release operation button 5c. When the two arm members 5a and 5b are elastically deformed by operating the release operation button 5c, since the two arm members 5a and 5b brace each other their freedom for elastic deformation is reduced. As a result, the interference amount of the lock member 5d formed on the arm member 5a with the hook portion 6 formed on the rear surface of the lid 3 must be reduced. Further, since the lock release operation button 5c is provided as a free end portion, the lock release operation button 5c is easily twisted with the result that the engaging amount of the lock member 5d with the hook portion 6 is still further reduced. This makes the locking imperfect, and there is a risk that the lock member 5d will be disengaged from the hook portion 6 inadvertently. In addition, since the two arm members 5a and 5b affect each other, they are likely to be broken by the accumulated stress. Thus, the life span thereof will be shortened.

According to the invention there is provided a disc cartridge comprising:

a housing main body for rotatably housing therein a disc-shaped recording medium;

a lid hinged to the housing main body; and

locking means provided on the housing main body and comprising a flexible member having an engagement portion engageable with an engagement member formed on the lid and having elasticity and an operation portion whereby the flexible member can be elastically deformed thereby to release the engagement of the engagement portion with the engagement member of the lid;

characterised in that the flexible member is a single arm member and a guide is provided to guide the operation portion rectilinearly, the guide being formed by a guide shaft formed on one of the housing main body and a side surface of the operation portion and having an axis which is substantially parallel to the engagement release movement direction of the operation portion, and a guide opening formed on the other of the housing main body and the side surface of the operation portion and into which the guide shaft is inserted.

The lid of such a disc cartridge can be locked positively to the housing main body but can be easily released.

The disc cartridge can be applied to pick-up devices of various kinds including a pick-up device having an objective lens placed at a position offset to either the right or the left due to an objective lens drive mechanism in the pick-up device.

The invention is diagrammatically illustrated by way of example in the accompanying drawings, in which:-

Figure 1 is a perspective view illustrating an example of a disc cartridge of previously proposed kind with a lid thereof open;

Figure 2 is a plan view illustrating on an enlarged scale one portion of the disc cartridge shown in Figure 1;

Figures 3A and 3B are cross-sectional views of a locking portion of the disc cartridge of Figure 1 respectively in the locked and unlocked positions;

Figure 4 is a perspective view showing an embodiment of a disc cartridge according to the invention with a lid thereof open;

Figure 5 is a partly exploded perspective view illustrating the rear side of the disc cartridge of Figure 4;

Figures 6A and 6B are respectively cross-sectional views of an engaging portion of a cartridge main body with the lid, Figure 6A showing the housing main body and the lid engaged with each other, and Figure 6B showing them released from engagement;

Figure 7 is a side view illustrating a main portion of the housing main body of the disc cartridge of the invention;

Figures 8A and 8B are respectively enlarged plan views of the main portion of the disc cartridge of the invention used to explain its operation wherein Figure 8A illustrates the engaged state whereas Figure 8B illustrates the disengaged state;

Figure 9 is an enlarged cross-sectional view of a guide member of a disc cartridge according to the invention;

Figure 10 is a cross-sectional view taken along line I-I in Figure 9.

Figure 11 is a cross-sectional view illustrating a main portion of another example of the guide portion of a disc cartridge according to the invention;

Figure 12 is a plan view illustrating a main portion of a spring mechanism according to the invention used to return a shutter to the original condition;

Figure 13 is a plan view of the same spring mechanism as that shown in Figure 12, illustrating the state that the shutter is moved leftwardly;

Figure 14 is a like plan view illustrating the state in which the shutter is moved rightwardly;

Figure 15 is a plan view of a main portion of a mechanism provided in a recording and/or reproducing apparatus and illustrating the shutter moved in the left-hand direction;

Figure 16 is a like plan view illustrating the shutter moved in the right-hand direction;

Figure 17 is an enlarged perspective view illustrating a detected surface portion formed on the housing main body of a disc cartridge according to the invention;

Figure 18 is a plan view of a main portion of recording and/or reproducing apparatus, illustrating the operating state in which the housing main body is inserted thereinto;

Figure 19 is a plan view of a main portion of a mis-insertion preventing device, in which a disc cartridge is shown correctly inserted into the recording and/or reproducing apparatus; and

Figure 20 is a like plan view illustrating a disc cartridge erroneously inserted into the recording and/or reproducing apparatus.

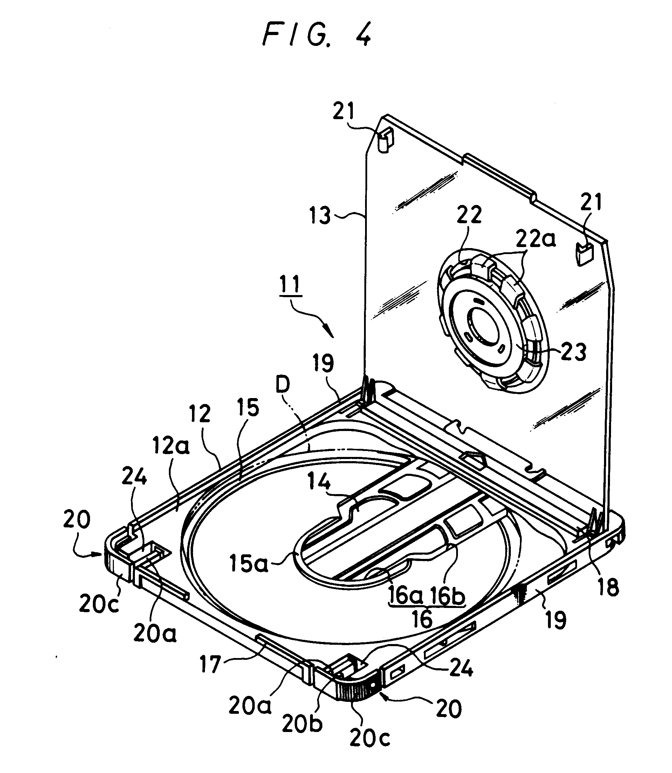

Figures 4 to 10 show a disc cartridge which holds therein a disc-shaped recording medium (hereinafter simply referred to as a disc) D of shape and size the same as those of a so-called compact disc (CD) although discs of other kinds may also be used.

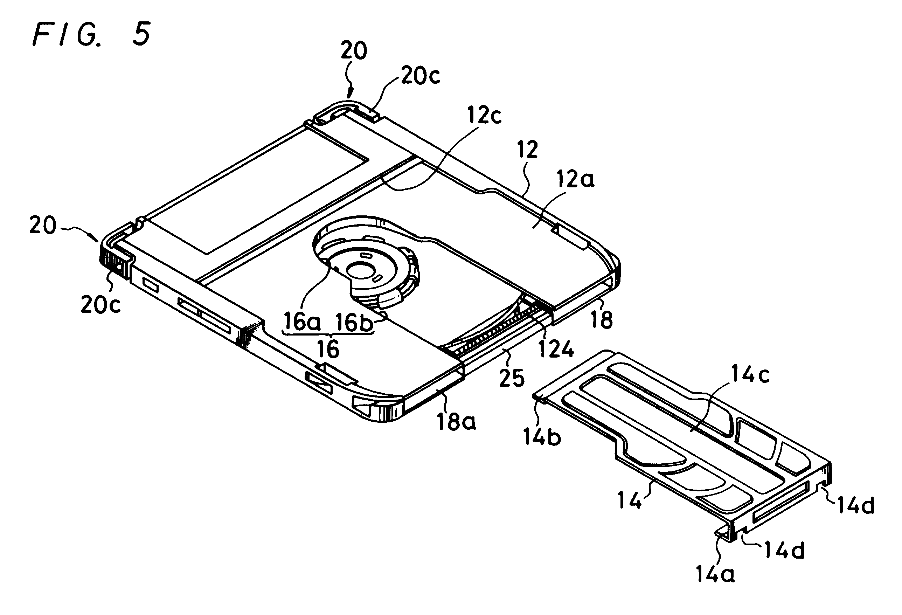

In the embodiment of Figure 4 and 5 a disc cartridge 11 comprises a housing main body 12, a lid 13 and a shutter 14.

The housing main body 12 is a solid member of rectangular-shaped plate made of a moulded synthetic resin material and having at the centre portion of its major surface 12a a circular concave disc holder portion 15 for holding thereon the disc D. The disc holder portion 15 is provided with an opening 16 extending from the central portion of the disc holder portion 15 to the rear portion thereof. The opening 16 is made up of a circular opening 16a selected in shape so as to correspond to a disc table of a recording and/or reproducing pick-up device (not shown) and a rectangular-shaped opening 16b continuous to the circular opening 16a and to the rear side thereof so as to correspond to the movable portion of a recording and/or reproducing pick-up device. Around the peripheral edge of the circular opening 16a, there is formed a protruding holder edge surface 15a. At the front edge of the major surface 12a, there is formed a front wall 17, and a rear wall 18 is formed at the rear edge of the major surface portion 12a. Side walls 19, 19 are respectively formed at the right and left edges of the major surface 12a. Locking means 20, 20 for locking the lid 13 are respectively formed at both front corner portions of the major surface 12a. The locking means 20, 20 will be described later more fully.

A rectangular-shaped lid 13 which corresponds in size to the major surface 12a is rotatably pivoted to the rear wall 18. The lid 13 is formed of a moulded transparent synmthetic resin material and is selected in size to be engaged with the inner surface sides of the peripheral wall 17, 18, 19 and 19 of the major surface 12a of the housing main body 12. Engagement hook portions 21, 21 project from the inner surface of the front portion of the lid 13 at positions adjacent the corners thereof. In a central portion of the lid 13, there is formed a circular opening 22 corresponding to the circular opening 16a of the opening 16 in the housing main body 12. A stabilizer 23 is inserted into the opening 22 with a clearance and is supported by a plurality of support members 22a formed around the peripheral edge of the circular opening 22 so as to be rotatable and movable.

The stabilizer 23 holds the central portion of the disc D which is inserted into and held on the disc holder portion 15 of the housing main body 12 of the disc cartridge 11. In this embodiment, the stabilizer 23 is made of a synthetic resin material and formed to a disc-shaped. The stabilizer 23 houses therein a magnetic metal plate (not shown) which enables the stabilizer 23 to hold the disc D magnetically, or in a so-called magnet-chucking fashion in cooperation with the disc table.

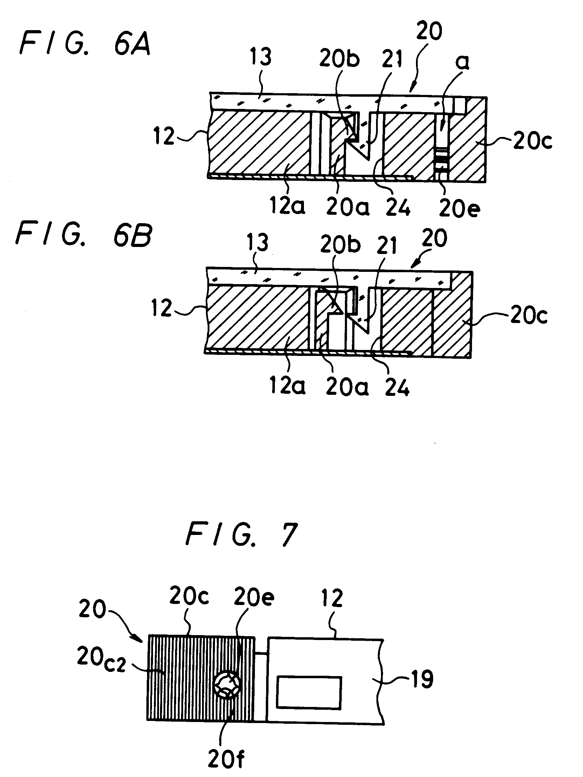

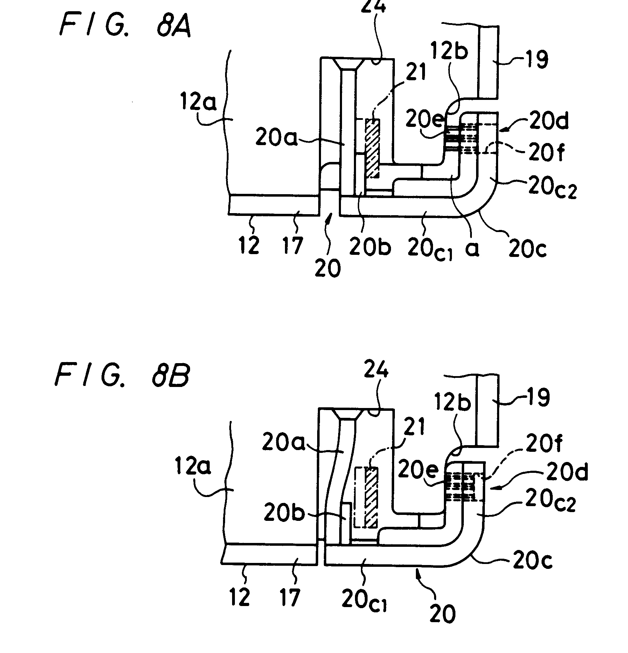

Since both locking means 20 and 20 are formed on the housing main body 12 to lock the lid 13 are identical only the locking means 20 formed at the right-hand corner of the housing main body 12 will be described in detail with reference to Figures 6 to 10.

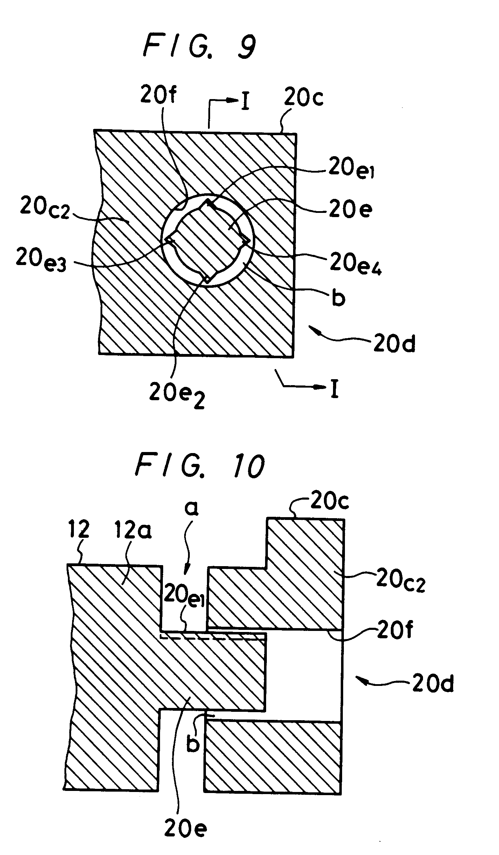

As illustrated in Figures 8A and 8B, in the locking means 20 which is provided at the right-hand corner of the housing main body 12, a cut-away concave portion 24 is formed near the right-hand corner portion of the front end portion of the major surface 12a so as to extend forwards. A single arm member 20a is so formed that it can be elastically deformed in the lateral direction. On one side surface portion of the front end of the arm member 20a, there is formed a lock member 20b which is to be engaged with the right-hand hook portion 21 of the lid 13. A lock release operation portion 20c is integrally formed with the arm member 20a as one unit at its front end portion. The lock release operation portion 20c is formed to be substantially L-shaped and extends from the right-hand side end of the front wall portion 17 to the front end of the right side wall 19 corresponding to a cut-away portion 12b formed near the right-hand corner portion of the major surface 12a. The lock release operation portion 20c is coupled at its front arm portion $20_{c1}$ corresponding to the front wall 17 to the arm member 20a so as to extend perpendicular thereto, and a side arm portion $20_{c2}$ of the lock release operation portion 20c corresponding to the side wall portion 19 is opposed to the front end of the side surface of the major surface 12a with a predetermined spacing a. Within this spacing a, there is formed a guide portion 20d by which the lock release operation portion 20c is guided in the lateral direction, that is to say a direction substantially perpendicular to the extent of the arm member 20a. As illustrated in Figures 9 and 10, the guide portion 20d comprises a guide shaft 20e projecting laterally at the front of the major surface 12a and a guide opening 20f which extends laterally through the side arm portion $20_{c2}$ of the operation portion 20c. A predetermined clearance b is formed between the guide shaft 20e and the guide opening 20f due to a metal mould upon moulding. In this embodiment, in order to reduce the clearance b, protruding portions $20_{e1}$, $20_{e2}$, $20_{e3}$ and $20_{e4}$ are formed on the outer peripheral surface of the guide shaft 20e extending axially on its upper and lower sides and its front and rear sides. Instead of the protruding portion $20_{e1}$ to $20_{e4}$ formed on the outer peripheral surface of the guide shaft 20e, it is possible to form similar protruding portions on the inner peripheral surface of the guide opening 20f.

In order to form the protruding portions $20_{e1}$ to $20_{e4}$ on the outer peripheral surface of the guide shaft 20e or the inner peripheral surface of the guide opening 20f, a thin portion must be formed on the metal moulds for the guide shaft 20e and the guide opening 20f, or the cylindrical slide metal mould so that the height of each of the protruding portions is determined on the basis of the strength of the metal mould.

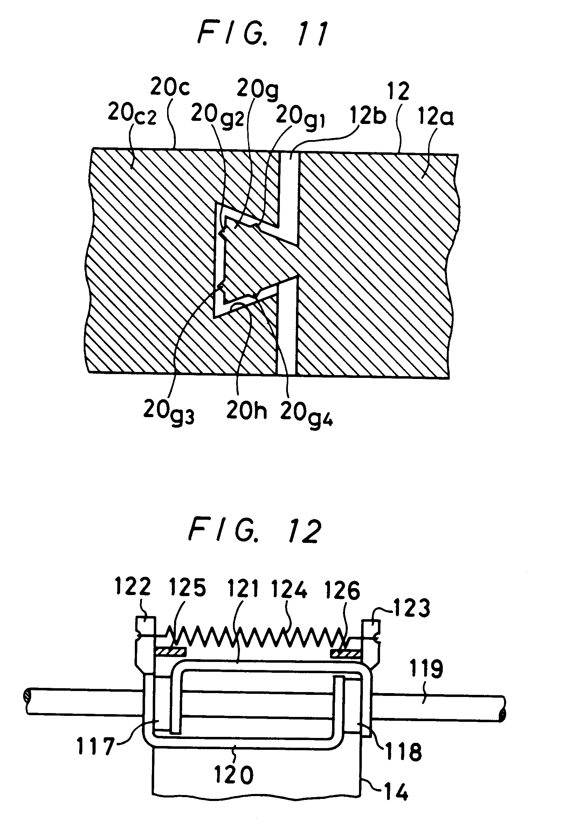

The guide portion 20d is not limited to engagement between the shaft and the opening but may be formed on the basis of engagement between a dovetail portion 20g and a dovetail groove portion 20h as shown in Figure 11. Also, in this case, protruding portions $20_{g1}$, $20_{g2}$, $20_{g3}$ and $20_{g4}$ are respectively formed on the outer surface of the dovetail portion 20g. Alternatively, the above mentioned protruding portions may be formed on the inner surface of the dovetail groove portion 20h.

When the lid 13 is pivoted forwardly relative to the housing main body 12 and closed, as shown in Figure 6A, the locking means 20 locks the lids 13 by engaging the lock member 20b of the arm member 20a with the hook portion 21 of the lid 13. In this locking state, if the side arm portion $20_{c2}$ of the lock release operation portion 20c is pressed inwardly by a user's finger, the arm member 20a is flexibly deformed and displaced together with the lock release operation portion 20c with the result that, as shown in Figure 6B, the lock member 20b of the arm member 20a is disengaged from the hook portion 21 of the lid 13 and the lid lock is released. During this operation, the lock release operation portion 20c is shifted or displaced rectilinearly without being swung due to the slidable engagement of the guide shaft 20e, namely, its protruding portions $20_{e1}$ to $20_{e4}$ with the inner peripheral surface of the guide opening 20f in the guide portion 20d. Accordingly, the arm member 20a can be elastically deformed satisfactorily.

Returning to Figure 5, the shutter 14 is formed of a thin plate such as a metal plate to close the opening 16 in the housing main body 12. The shutter 14 is made to contact the rear side of the major surface 12a of the housing main body 12. A rear portion 14a of the shutter 14 is formed to have a U-shped cross-section and is movably engaged with a sliding member or slider 25 which can be slid along a guide groove 18a formed at the rear side of the rear wall 18 in the lateral direction of the major surface 12a. A front portion 14b of the shutter 14 is inserted into a slit portion 12c formed through the front portion of the rear side of the major surface 12a in the lateral direction and is slidably movable in the lateral direction to open and close the opening 16. The slider 25 is biased by a spring 124 (see Figure 12) so as always to be placed at the central position, whereby the shutter 14 always closes the opening 16. Further, on the rear surface of the shutter 14, there is formed a concave guide groove 14c which extends in the longitudinal direction of the shutter 14 at its centre and in the lateral direction thereof in a rib-like fashion.

A mechanism by which the shutter 14 is returned to the central position where the shutter 14 closes the opening 16 will now be described.

As illustrated in Figure 12, guide members 117 and 118 are fixed to the left-hand and right-hand front ends of the shutter 14, respectively. The guide members 117 and 118 are guided by a guide rod 119, and slide members 120 and 121 are also guided by this guide rod 119. The sliding members 120 and 121 are each formed to have a U-shape and are respectively provided with engaging member 122 and 123. The spring 124 is tensioned between the engaging members 122 and 123 and the engaging members 122 and 123 cooperate with stops 125 and 126.

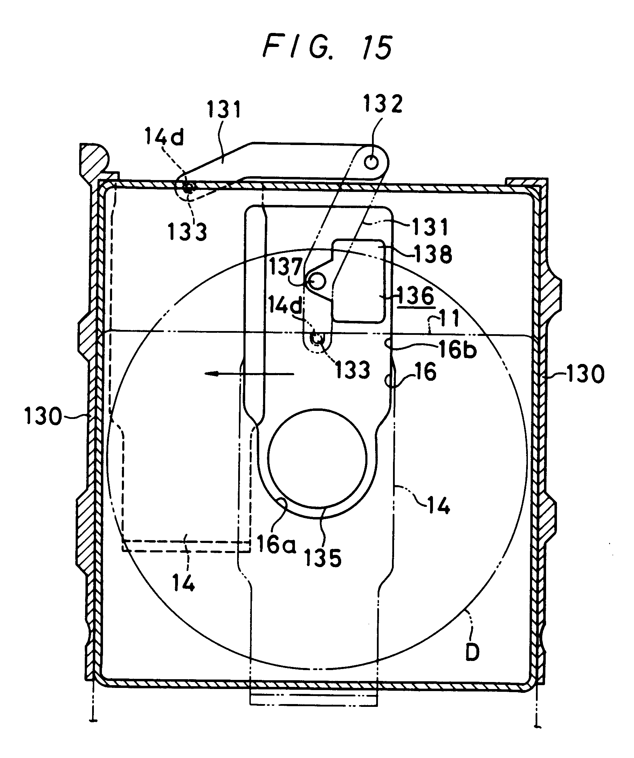

An arrangement to open the shutter 14 will next be described. As shown in Figure 15, the recording and/or reproducing apparatus (not shown) into which the disc cartridge 11 is loaded is provided with a pair of right and left insertion guide members 130 and 130. A lever 131 for opening the shutter 14 is provided to oppose the space between the guide members 130 and 130. The lever 131 is rotatably supported on the apparatus on a supporting pin 132 and is ordinarily at the position shown by a two-dot chain line in Figure 15. The lever 131 is provided with a pin 133 at its free end, and the pin 133 is engaged with a notch 14d of the shutter 14 so as to open the shutter 14. Two notches 14d and 14d (see Figure 5) may be provided on the shutter 14 spaced apart in the direction in which the shutter 14 is slidably movable.

When a pick-up device 136 which is provided with an objective lens drive mechanism 138 placed at the right-hand side relative to its objective lens 137 is employed as shown in Figure 15, the shutter 14 is moved leftwardly to the open position as shown in Figure 15 by the broken line. In this case, the supporting pin 132 of the lever 131 is previously displaced rightwardly relative to the centre.

When a disc cartridge 11 is inserted between the insertion guide members 130 and 130 of such apparatus, and the front end of the disc cartridge 11 is thereby inserted to the position as shown by a two-dot chain line in Figure 15, the notch 14d of the shutter 14 is engaged with the pin 133 mounted at the free end of the lever 131. In this state, if the disc cartridge 11 is further guided upwardly (as viewed in Figure 15) along the guide members 130 and 130, the lever 131 is rotated about the supporting pin 132 as a centre in the clockwise direction. Accordingly, the shutter 14 is moved leftwardly by the pin 133 in association with the rotation of the lever 131, thereby to open the opening 16 of the disc cartridge 11 as shown in Figure 15. In other words, the shutter 14 completely opens the central circular opening 16a of the opening 16 of the disc cartridge 11. A disc table 135 can be inserted into the disc cartridge 11 through the opening 16a of the opening 16. Further, the shutter 14 completely opens the right-hand portion of the rectangular opening 16b of the opening 16 but still covers a part of the left-hand portion of the opening portion 16b. However, this provides an opening large enough to enable the pick-up device 136 having its objective lens drive mechanism 138 provided at its right-hand side to be moved thereinto.

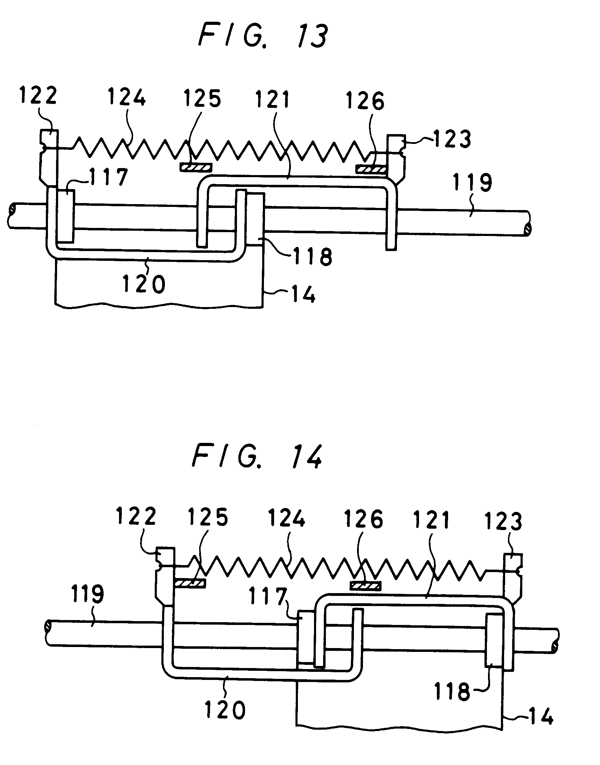

When the shutter 14 is moved leftwardly as set forth above, the first slide member 120 is moved leftwardly by the guide members 117 and 118 which are moved along the guide rod 119 as shown in Figure 13 with the result that the spring 124 is extended. Accordingly, if the disc cartridge 11 is taken out from the space between the guide members 130 and 130, for example, after the reproducing thereof ended, the engagement between the pin 133 of the lever 131 and the notch 14d of the shutter 14 is broken so that the shutter 14 is returned to its original position by the spring force of the spring 124 and then placed in the state shown in Figure 12. In other words, the shutter 14 is stopped at its middle position by the pair of stops 125 and 126 and, hence, the shutter 14 completely closes the opening 16.

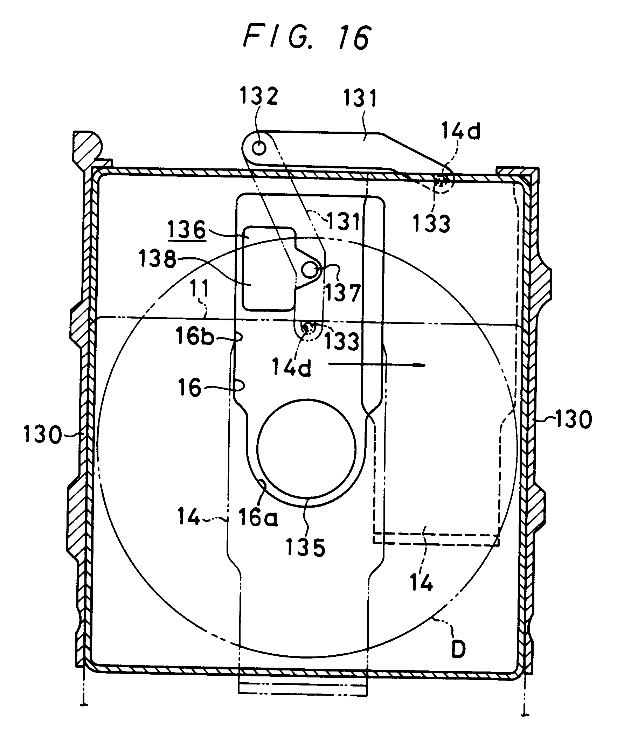

When a pick-up 136 having an objective lens driving mechanism 138 at its left-hand side relative to the objective lens 137 is utilized, as shown in Figure 16, the supporting pin 132 of the lever 131 is displaced to the left-hand side as shown in Figure 16. Then, if a disc cartridge 11 is inserted between the guide members 130 and 130, the notch 14d of the shutter 14 and the pin 133 of the lever 131 are engaged with each other at the position shown by a two-dot chain line in Figure 16. If the disc cartridge 11 is further inserted (or further moved upwardly as viewed in Figure 16), the shutter 14 is moved rightwardly as the lever 131 is rotated in the anti-clockwise direction. As a result, the shutter 14 completely opens the central opening 16a of the opening 16 through which the disc table 135 is inserted and the left-hand portion of the rectangular opening 16b of the opening 16 while still covering a part of the right-hand portion of the rectangular opening 16b, thus enabling the pick-up device 136 to move in the axial direction of the disc D.

In this case, as shown in Figure 14, as the shutter 14 is moved rightwardly, the sliding member 121 is also moved rightwardly along the guide rod 119. Thus, the spring 124 is pulled in the same right-hand direction, thus being extended. Accordingly, if the disc cartridge 11 is unloaded from the recording and/or reproducing apparatus after playback thereof ends, the shutter 14 is returned to the middle position by the spring force of the spring 124 so as thereby to close the opening 16. According to the mechanism using the spring 124, the shutter 14 movable both in the right-hand and left-hand direction can be always returned to the middle position by the use of the singla spring 124 and placed at the correct position at which the shutter 14 covers the opening 16.

When the disc cartridge 11 is inserted into the recording and/or reproducing apparatus by a predetermined amount as described above, the shutter 14 is engaged with the operation member or the pin 133 or the lever 131 provided at the side of the recording and/or reproducing apparatus and is slidably moved by this operation member in connection with the movement of the disc cartridge 11, thereby opening the opening 16 of the housing main body 12.

If the disc cartridge 11 is inserted into the recording and/or reproducing apparatus under the correct posture, such as, correct angle, correct direction, etc., the shutter 14 is moved in the predetermined direction by the operation members thereby to open the opening 16 of the housing main body 12. If on the other hand the disc cartridge 11 were to be inserted into the recording and/or reproducing apparatus in an incorrect posture, such as at a wrong angle or in the wrong direction, the shutter 14 would not be moved to open the opening 16 by the operating member and also the normal recording and/or reproducing operation would not be carried out by the pick-up device 136. In this case, the shutter 14 and the pick-up device 136 would make contact with one another, thus disabling the ejection of the disc cartridge 11 from the recording and/or reproducing apparatus. This could cause damage to the recording and/or reproducing apparatus.

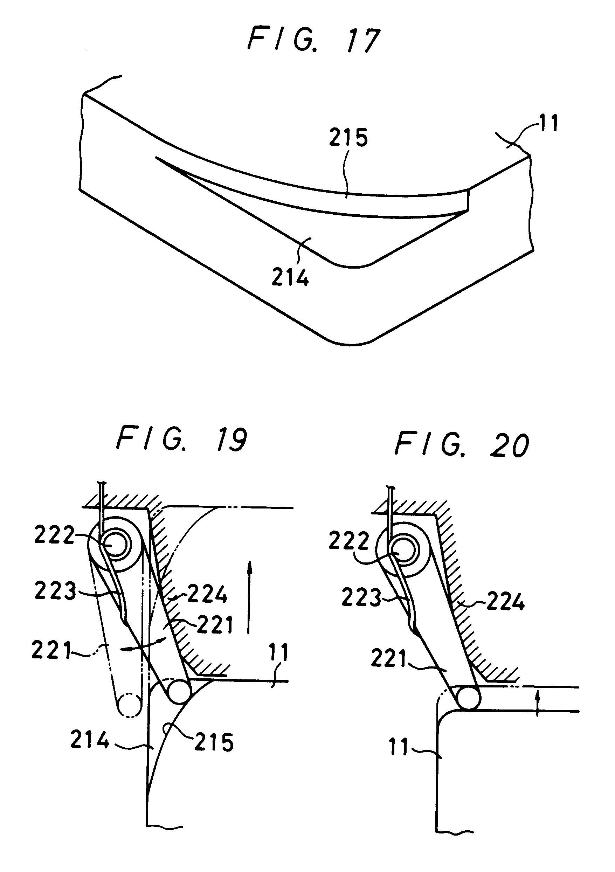

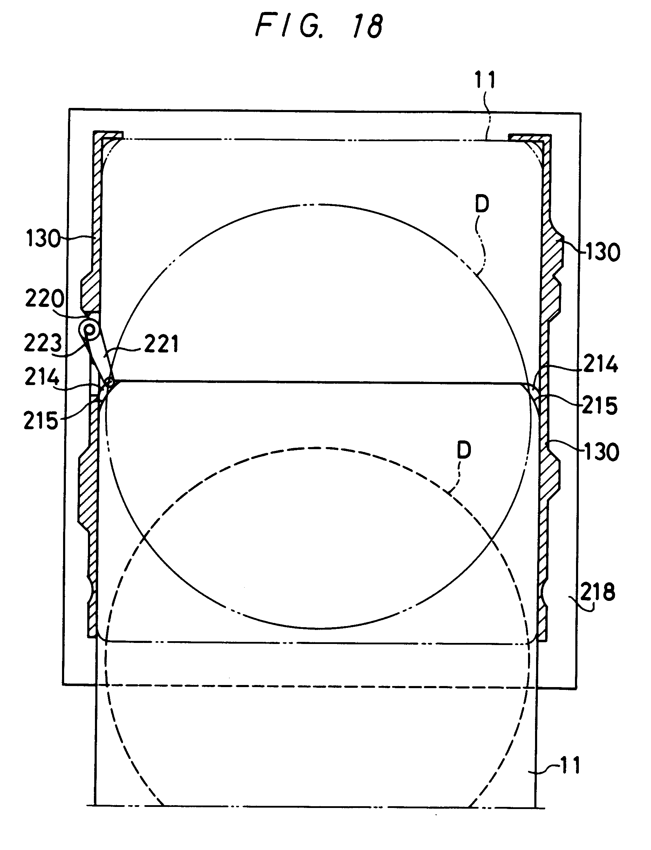

The disc cartridge 11 is therefore provided with a detecting portion used to prevent mis-insertion. The detecting portion used to prevent the mis-insertion of the disc cartridge 11 will now be described with reference to Figures 17 to 20.

As shown on a magnified scale in Figure 17, the disc cartridge 11 is provided with a stepped portion 214 at one front corner thereof as considered in its direction or insertion into the recording and/or reproducing apparatus. The edge of the stepped portion 214 is formed as a detecting surface 215 having a large curvature.

On the other hand, the recording and/or reproducing apparatus into which a disc cartridge 11 houding therein a disc D is loaded is provided with a support plate 218 as shown in Figure 18. On the support plate 218, there are formed the pair of right and left insertion guide members 130 and 130 mentioned before. A cut-away portion 220 is formed through at least one guide member 130 and a detecting lever 221 is pivoted to the support plate 218 to oppose the notch 220. The detecting lever 221 is rotatably supported on the support plate 218 by a supporting pin 22 mounted thereon as shown in Figure 19 and biased by a spring 223 so as to rotate around the supporting pin 22 in the anti-clockwise direction as shown in Figures 18 and 19.

With the apparatus constructed as mentioned hereinabove, if a disc cartridge 11 with a disc D housed therein is inserted between the insertion guide members 130 and 130 provided on the support plate 218 of the apparatus in the correct posture (correct angle and correct direction,), as shown in Figure 19, the detecting surface 215 forming the edge of the stepped portion 214 formed at one front corner of the disc cartridge 11 in its insertion direction contacts the free end of the detecting lever 221. Then, the free end of the detecting lever 221 is pushed by the detecting surface 215 as the disc cartridge 11 is further inserted so that the detecting lever 221 is rotated around the supporting pin 222 in the clockwise direction against the spring force of the spring 223 as shown by a two-dot chain line in Figure 19. Accordingly, in this case, the detecting lever 221 does not obstruct the further insertion of the disc cartridge 11 so that the disc cartridge 11 can be fully inserted into the recording and/or reproducing apparatus up to its correct position. In other words, since the angle of the detected surface 215 is selected so as to rotate the detecting lever 221 in the direction away from the disc cartridge 11, the correct insertion of the disc cartridge 11 can be detected by utilizing its detecting surface 215 and loading of the disc cartridge 11 in the apparatus is permitted.

If on the other hand the disc cartridge 11 is inserted into the apparatus in the wrong posture (wrong angle and wrong direction, etc.), as shown in Figure 20, the stepped portion 214 and the detecting surface 215 are not located at a position on the disc cartridge 11 whee they will contact the detecting lever 221. Accordingly, in this case, the flat edge of the top portion of the disc cartridge 11 is directly detected by the detecting lever 221. Then, the flat surface of the top portion of the disc cartridge 11 acts on the detecting lever 221 to rotate the lever 221 around the pin 222 in the anti-clockwise direction. However, since the detecting lever 221 is prevented from being rotated further in the anti-clockwise direction by a side wall 224 of the guide member 130, the detecting lever 221 serves as a stop and prevents the disc cartridge 11 from being inserted further into the recording and/or reproducing apparatus. Accordingly, if the disc cartridge 11 is inserted into the recording and/or reproducing apparatus in the incorrect posture, the detecting lever 221 can prevent the disc cartridge 11 from being inserted further into the recording and/or reproducing apparatus. In this way, erroneous insertion of the disc cartridge 11 can be avoided.

Thus, the mis-insertion preventing device is formed merely by providing the detecting surface 215 on the disc cartridge 11 and the detecting lever 221 at the side of the recording and/or reproducing apparatus at the position where the disc cartridge 11 is inserted thereinto and is simple in construction. In this case, the detecting lever 221 has the functions of detecting mis-insertion of the disc cartridge 11 and stopping further advancement of a disc cartridge 11 which is mis-inserted. Therefore, it becomes possible to provide the mis-insertion preventing device which can be manufactured at low cost.

When the disc cartridge 11 is set in the recording and/or reproducing apparatus at its predetermined position as described above, the disc table is inserted into the housing main body 12 through the circular opening 16a of the opening 16. Then, the stabilizer 23 is magnetically chucked to the disc table and the disc D is held between the disc table and the stabilizer 23. Under this condition, the pick-up device is made to face the disc D through the rectangular-shaped opening 16b of the opening 16. When the disc table is rotated, the disc D is also rotated together with the stabilizer 23 with the result that the information signal is recorded by the pick-up device or that the recorded signal is reproduced by the pick-up device.

Since the particular construction of disc recording and/or reproducing apparatus is not directly related to the invention, the disc recording and/or reproducing apparatus is not described in detail and is not shown.

The locking means for locking and releasing the lid to and/or from the housing main body of the disc cartridge is formed as the signal arm member having an engagement portion to be engaged with the engaging portion formed on the lid and having flexibility, the operation portion for breaking the engagement of this arm member and the guide member for guiding this operation portion rectilinearly, so that the arrangement of this locking means is simplified. At the same time, elastic deformation of the arm member is performed by the inner movement of the operation portion, so that the arm member can be moved smoothly without wobbling. Therefore, the engagement portion of the arm member is positively engaged with and disengaged from the engaging portion of the lid and the locking means can be held at respective operation position. Further, the lid can be prevented from being opened inadvertently relative to the housing main body but it is not difficult to open, it when the disc is loaded into and/or unloaded from the disc cartridge. In addition, since the arm member is formed as a breakage of the arm member by accumulated stress is reduced and the arm member and hence the disc cartridge can be made to have a long life span and the lid of the disc cartridge can always be opened and closed with ease.

The shutter is slidably attached to the housing main body so as to cover the opening of the disc cartridge and can be moved in the direction perpendicular to the moving direction of the pick-up device and in both the left and right directions. The opening portion through which the disc table is inserted is always opened even when the shutter is moved in any one of the right and left directions and the opening portion is formed, in which the pick-up device can be moved while the shutter covers one portion of the rectangular-shaped opening portion. Therefore, according to the arrangement as described hereinabove, it is possible to provide a disc cartridge which can be used in both cases where the pick-up device is located at rightwardly and leftwardly-projecting positions.

**Claims**

1. A disc cartridge (11) comprising:
   a housing main body (12) for rotatably housing therein a disc-shaped recording medium (D);
   a lid (13) hinged to the housing main body; and
   locking means (20) provided on the housing main body (12) and comprising a flexible member (20a) having an engagement portion (20b) engageable with an engagement member (21) formed on the lid (13) and having elasticity and an operation portion (20c) whereby the flexible member (20a) can be elastically deformed thereby to release the engagement of the engagement portion (20b) with the engagement member (21) of the lid (13);
   characterised in that the flexible member is a single arm member (20a) and a guide (20e, 20f, 20g, 20h) is provided to guide the operation portion (20c) rectilinearly, the guide (20e, 20f, 20g, 20h) being formed by a guide shaft (20e) formed on one of the housing main body (12) and a side surface of the operation portion (20c) and having an axis which is substantially parallel to the engagement release movement direction of the operation portion (20c), and a guide opening (20f) formed on the other of the housing main body (12) and the side surface of the operation portion (20c) and into which the guide shaft (20e) is inserted.

2. A disc cartridge according to claim 1, wherein a protrusion (20e1) is formed on either the outer peripheral surface of the guide shaft (20e) or the inner peripheral surface of the guide opening (20f).

3. A disc cartridge according to claim 1, wherein the guide comprises a dovetail (20g) formed on one of the housing main body (12) and a side surface of the operation portion (20c) and extending in a direction substantially parallel to an engagement releasing operation direction of the operation portion (20c) and a dovetail groove (20h) formed in the other of the housing main body (12) and the side surface of the operation portion (20c) and engaged with the dovetail (20g).

4. A disc cartridge according to claim 3, wherein a protrusion (20g) is formed on one of the outer peripheral surface of the dovetail (20g) and an inner peripheral surface of the dovetail groove (20h).

5. A disc cartridge according to claim 1, wherein the locking means (20), the engagement portion (20b), the arm member (20a), the operation portion (20c) and the guide (20e-h) are integrally formed with the housing main body (12).

6. A disc cartridge according to claim 1, further comprising a shutter (14) slidably mounted at one surface of the housing main body (12) to open and close an opening (16) formed through the housing main body (12) and through which a portion of the disc-shaped recording medium (D) located on the housing main body (12) faces the outside.

7. A disc cartridge according to claim 6, wherein the shutter (14) is freely slidable in both right and left directions relative to a middle position of the opening (16).

8. A disc cartridge according to claim 7, wherein the shutter (14) is so formed that the width of a first portion adjacent a central portion of the disc-shaped recording medium (D) and at a free end is narrower than the width of a second portion facing an information signal recording area of the disc-shaped recording medium (D) and located on the side to which the shutter (14) is attached.

9. A disc cartridge according to claim 8, wherein when the shutter (14) is moved and stopped in the direction and at a position to open the opening (16) of the housing main body (12), the second portion of the shutter (14) still closes a portion of the opening (16b) while the first portion of the shutter completely opens the opening (16a) of the housing main body (12).

10. A disc cartridge according to claim 6, wherein the housing main body (12) has, at a corner of a surface thereof which the shutter slidably contacts, a detecting portion (214, 215) to prevent mis insertion of the disc cartridge.

11. A disc cartridge according to claim 10, wherein the detecting portion is formed as a stepped portion (214) lowered from a bottom of the housing main body (12) and a detecting surface (215) at the edge of the stepped portion and having a predetermined curvature.

**Revendications**

1. Cartouche de disque (11) comportant :
un corps principal de boitier (12) destiné à loger de façon rotative un support d'enregistrement en forme de disque (D);
un couvercle (3) articulé sur le corps principal de boitier; et
des moyens de verrouillage (20) prévus sur le corps principal de boîtier (12) et comportant un élément flexible (20a) ayant une partie d'engagement (20b) pouvant être engagée avec un élément d'engagement (21) formé sur le couvercle (13) et présentant une élasticité et une partie d'actionnement (20c), l'élément flexible (20a) pouvant être élastiquement déformé afin de libérer l'engagement de la partie d'engagement (20b) avec l'élément d'engagement (21) du couvercle (13);
caractérisé en ce que l'élément flexible est un élément de bras unique (20a) et un guide (20e, 20f, 20g, 20h) est prévu pour guider de manière rectiligne la partie d'actionnement (20c), le guide (20e, 20f, 20g, 20h) étant constitué par un arbre de guidage (20e) formé sur le corps principal de boîtier (12) ou une surface latérale de la partie d'actionnement (20c) et ayant un axe qui est sensiblement parallèle à la direction de déplacement de déverrouillage de la partie d'actionnement (20c), et une ouverture de guidage (20f) formée sur la surface latérale de la partie d'actionnement (20c) ou le corps principal de boîtier (12) et dans laquelle est inséré l'arbre de guidage (20e).

2. Cartouche de disque selon la revendication 1, dans laquelle une saillie (20e1) est formée sur la surface périphérique extérieure de l'arbre de guidage (20e) ou sur la surface périphérique intérieure de l'ouverture de guidage (20f).

3. Cartouche de disque selon la revendication 1, dans laquelle le guide comporte une queue d'aronde (20g) formée sur le corps principal de boîtier (12) ou une surface latérale de la partie d'actionnement (20c) et s'étendant dans une direction sensiblement parallèle à une direction d'actionnement de déverrouillage de la partie d'actionnement (20c) et une rainure en queue d'aronde (20h) formée sur la surface latérale de la partie d'actionnement (20c) ou le corps principal de boîtier (12) et engagée avec la queue d'aronde (20g).

4. Cartouche de disque selon la revendication 3, dans laquelle une saillie (20g) est formée sur la surface périphérique extérieure de la queue d'aronde (20g) ou une surface périphérique intérieure de la rainure en queue d'aronde (20h).

5. Cartouche de disque selon la revendication 1, dans laquelle les moyens de verrouillage (20), la partie d'engagement (20b), l'élément de bras (20a), la partie d'actionnement (20c) et le guide (20e-h) sont formés d'un seul tenant avec le corps principal de boîtier (12).

6. Cartouche de disque selon la revendication 1, comportant en outre un volet (14) monté de façon coulissante sur une surface du corps principal de boîtier (12) afin d'ouvrir et fermer une ouverture (16) formée à travers le corps principal de boîtier (12) et à travers laquelle une partie du support d'enregistrement en forme de disque (D) situé sur le corps principal de boitier (12) fait face à l'extérieur.

7. Cartouche de disque selon la revendication 6, dans laquelle le volet (14) peut coulisser librement à la fois à gauche et à droite par rapport à la partie médiane de l'ouverture (16).

8. Cartouche de disque selon la revendication 7, dans laquelle le volet (14) est formé de telle sorte que la largeur d'une première partie adjacente à une partie centrale à un support d'enregistrement en forme de disque (D) et à une extrémité libre est plus étroite que la largeur d'une deuxième partie faisant face à une zone d'enregistrement de signal d'information du support d'enregistrement en forme de disque (D) et située sur le côté auquel est fixé le volet (14).

9. Cartouche de disque selon la revendication 8, dans laquelle, lorsque le volet (14) est déplacé et arrêté dans la direction et dans une position afin d'ouvrir l'ouverture (16) du corps principal de boîtier (12), la deuxième partie du volet (14) ferme encore une partie de l'ouverture 16b alors que la première partie du volet ouvre complètement l'ouverture (16a) du corps principal de boîtier (12).

10. Cartouche de disque selon la revendication 6, dans laquelle le corps principal de boîtier (12) possède, dans un coin d'une surface que le volet touche de façon coulissante, une partie de détection (214, 215) afin d'empêcher une mauvaise insertion de la cartouche de disque (11).

11. Cartouche de disque selon la revendication 10, dans laquelle la partie de détection est réalisée sous une forme étagée (214) abaissée par rapport à un fond du corps principal de boîtier (12) et une surface de détection (215) au bord de la partie étagée et ayant une courbure prédéterminée.

**Patentansprüche**

1. Plattenkassette (11) mit einem Gehäuse-Hauptkörper (12), in dem ein plattenförmiger Aufzeichnungsträger (D) drehbar untergebracht ist,
mit einem an dem betreffenden Gehäuse-Hauptkörper angelenkten Deckel (13)
und mit einer Verriegelungseinrichtung (20), die an dem Gehäuse-Hauptkörper (12) vorgesehen ist und die ein flexibles Teil (20a) mit einem Anlagebereich (20b), der an einem an dem Deckel (13) gebildeten Anlageteil (21) in Anlage bringbar ist und der eine Elastizität aufweist, und mit einem Arbeitsbereich (20c) aufweist, wobei das flexible Teil (20a) elastisch verformbar ist, um dadurch die Anlage des Anlagebereiches (20b) an dem Anlageteil (21) des Deckels (13) zu lösen,
**dadurch gekennzeichnet,**
daß das flexible Teil ein einzelnes Armteil (20a) ist,
daß eine Führung (20e, 20f, 20g, 20h) für eine geradlinige Führung des Arbeitsbereiches (20c) vorgesehen ist,
daß die Führung (20e, 20f, 20g, 20h) durch eine Führungswelle (20e) gebildet ist, die an einem der durch den Gehäuse-Hauptkörper (12) und eine Seitenfläche des Arbeitsbereiches (20c) gegebenen Elemente gebildet ist und die eine im wesentlichen parallel zu der Anlage-Lösungs-Bewegungsrichtung des Arbeitsbereiches (20c) verlaufende Achse aufweist,
und daß in dem anderen Element der durch den Gehäuse-Hauptkörper (12) und die Seitenfläche des Arbeitsbereiches (20c) gegebenen Elemente eine Führungsöffnung (20f) gebildet ist, in die die Führungswelle (20e) eingeführt ist.

**2.** Plattenkassette nach Anspruch 1, wobei ein Vorsprung (20e1) entweder in der Außenumfangsfläche der Führungswelle (20e) oder in der Innenumfangsfläche der Führungsöffnung (20f) gebildet ist.

**3.** Plattenkassette nach Anspruch 1, wobei die Führung einen Schwalbenschwanz (20g) umfaßt, der in einem der durch den Gehäuse-Hauptkörper (12) und eine Seitenfläche des Arbeitsbereiches (20c) gegebenen Elemente gebildet ist und der in einer im wesentlichen parallel zu einer Anlage-Lösungs-Arbeitsrichtung des Arbeitsbereiches (20c) verlaufenden Richtung verläuft, und eine Schwalbenschwanznut (20h) aufweist, die in dem anderen der durch den Gehäuse-Hauptkörper (12) und die Seitenfläche des Arbeitsbereiches (20c) gegebenen Elemente gebildet ist und die sich mit dem Schwalbenschwanz (20g) in Anlage befindet.

**4.** Plattenkassette nach Anspruch 3, wobei ein Vorsprung (20g) in einer der durch die äußere Umfangsfläche des Schwalbenschwanzes (20g) und einer inneren Umfangsfläche der Schwalbenschwanznut (20h) gegebenen Flächen gebildet ist.

**5.** Plattenkassette nach Anspruch 1, wobei die Verriegelungseinrichtung (20), der Anlagebereich (20b), das Armteil (20a), der Arbeitsbereich (20c) und die Führung (20e-h) mit dem Gehäuse-Hauptkörper (12) zusammenhängend gebildet sind.

**6.** Plattenkassette nach Anspruch 1, umfassend ferner einen Verschluß (14), der an einer Seite des Gehäuse-Hauptkörpers (12) derart gleitbar angebracht ist, daß eine Öffnung (16) geöffnet und verschlossen wird, die durch den betreffenden Gehäuse-Hauptkörper (12) gebildet ist und durch die ein Teil des plattenförmigen Aufzeichnungsträgers (D), der auf dem Gehäuse-Hauptkörper (12) untergebracht ist, der Außenseite zugewandt ist.

**7.** Plattenkassette nach Anspruch 6, wobei der Verschluß (14) sowohl in rechter als auch in linker Richtung relativ zu einer Mittelposition der Öffnung (16) frei verschiebbar ist.

**8.** Plattenkassette nach Anspruch 7, wobei der Verschluß (14) so ausgebildet ist, daß die Breite eines ersten Bereiches neben einem mittleren Bereich des plattenförmigen Aufzeichnungsträgers (D) und an einem freien Ende schmaler ist als die Breite eines zweiten Bereiches, der einer Informationssignalaufzeichnungsfläche des plattenförmigen Aufzeichnungsträgers (D) zugewandt ist und der auf der Seite untergebracht ist, an der der Verschluß (14) angebracht ist.

**9.** Plattenkassette nach Anspruch 8, wobei in dem Fall,
daß der Verschluß (14) in die Richtung bewegt und an einer solchen Stelle stillgesetzt wird, daß die Öffnung (16) des Gehäuse-Hauptkörpers (12) geöffnet ist, der zweite Bereich des Verschlusses (14) noch einen Teil der Öffnung (16b) verschließt, während der erste Bereich des Verschlusses vollständig die Öffnung (16a) des Gehäuse-Hauptkörpers (12) öffnet.

**10.** Plattenkassette nach Anspruch 6, wobei der Gehäuse-Hauptkörper (12) an einer Ecke seiner einen Oberfläche, welche der Verschluß verschiebbar berührt, einen Fühlerbereich (214,215) für die Vermeidung einer falschen Einführung der Plattenkassette aufweist.

**11.** Plattenkassette nach Anspruch 10, wobei der Fühlerbereich als abgestufter Bereich (214), welcher von einem Boden des Gehäuses-Hauptkörpers (12) aus abgesenkt ist, und eine Fühlerfläche (215) an der Kante des abgestuften Bereiches mit einer bestimmten Krümmung ausgebildet ist.

EP 0 260 898 B1

# F I G. 1

## F I G. 2

## F I G. 3A

## F I G. 3B

# F I G. 4

FIG. 5

EP 0 260 898 B1

*F I G. 6A*

*F I G. 6B*

*F I G. 7*

16

FIG. 8A

FIG. 8B

# FIG. 9

# FIG. 10

FIG. 11

FIG. 12

## F I G. 13

## F I G. 14

# FIG. 15

# FIG. 16

FIG. 17

FIG. 19

FIG. 20

# FIG. 18